# EUROPÄISCHE PATENTSCHRIFT

(11) **EP 0 951 514 B1**
(45) Veröffentlichungstag und Bekanntmachung des Hinweises auf die Patenterteilung: **22.12.2004**
(21) Anmeldenummer: 98936606.7
(22) Anmeldetag: 17.08.1998
(51) Int. Cl.: C09D 5/00

(54) **HAFTLACK ZUR AUFNAHME VON FARBPULVERN**
ADHESIVE VARNISH FOR ABSORBING POWDER PAINT
VERNIS ADHESIF POUR L'ABSORPTION DE PEINTURES EN POUDRE

(30) Priorität: 01.09.1997 CH 204197
(43) Veröffentlichungstag der Anmeldung: 27.10.1999
(73) Patentinhaber: Rafka GmbH, 8810 Horgen (CH)
(72) Erfinder: WULLSCHLEGER, Raffael, CH-8617 Mönchaltorf (DE)
(74) Vertreter: Hepp, Dieter
(86) Internationale Anmeldenummer: PCT/IB1998/001252
(87) Internationale Veröffentlichungsnummer: WO 1999/011723

(56) Entgegenhaltungen:
- DE-A- 3 020 381
- DE-A- 3 740 972
- GB-A- 474 746
- DATABASE WPI Week 9416 Derwent Publications Ltd., London, GB; AN 132217 XP002083833 "print ink varnish preparation" A & JP 06 080919 A (DAINIPPON INK &CHEM)
- DATABASE WPI Week 7940 Derwent Publications Ltd., London, GB; AN 73180b XP002083834 "decorate design glass shop window preparation" A & SU 640 982 A (MOVISYAN) 1. August 1979

## Beschreibung

Die vorliegende Erfindungsbeschreibung betrifft einen Haftlack, dessen Verwendung zur Aufnahme von Farbpulvern sowie die Anwendungen der genannten Verwendung.

Lacke sind, gemäss Fachliteratur, Anstrichstoffe von flüssiger bis pastenförmiger Konsistenz, die man durch Streichen, Spritzen, Tauchen oder Uebergiessen auf die zu lackierenden Flächen oder Gegenstände bringt und die durch physikalische und/oder chemische Trocknung einen auf dem Untergrund fest haftenden Ueberzug, meistens eine sehr dünne Schicht (Anstrichfilm), ergeben. Lacke bestehen aus einer Auflösung geeigneter organischer Filmbildner und Weichmacher in einem Lösungsmittel oder einem Lösungsmittelgemisch, gegebenenfalls unter Zusatz von Sikkativen (Trockenstoffe) oder auch Pigmenten. Pigmentierte Lacke werden als Lackfarben bezeichnet.

### Wichtige Lacke werden nun speziell beschrieben:

Oellacke sind Lösungen von Natur- oder Kunstharzen und trocknenden Oelen mit Zusätzen von Sikkativen in flüchtigen organischen Lösungsmitteln, wie Terpentinöl oder Benzin. Als trocknende Oele verwendet man neben Holzöl hauptsächlich Leinöl, ferner Tallöl, Rizinusöl, Oiticicaöl und Perillaöl. Durch Erhitzen werden die Oele zu Standölen verkocht, wobei im allgemeinen 2 bis 3 Oelmoleküle zusammentreten.

Unter Kunstharzlacken versteht man im üblicherweise luft- und ofentrocknende Alkydharzlacke, auch mit Zusätzen anderer Harztypen. Im weiteren

Sinne sind Kunstharzlacke alle Lacke oder Lackfarben mit Kunstharzen als Filmbildner. Hierzu gehören z.B. Harnstoff-, Melamin-, Phenolharze und sonstige Plaste für Lacke.

Wesentlich in allen angegebenen Fällen ist also, dass der Lack entweder ohne Farbpulver, d.h. festen Pigmentmischungen, aufgetragen wird oder diese schon enthält. Eine Lackierung mit nachträglicher unabhängiger Einfärbung wird nicht gelehrt.

Diesen Nachteil überwindet der erfindungsgemässe Haftlack zur Aufnahme von Farbpulvern.

JP 06-080919 beschreibt einen Drucklack für Offsetverfahren, der neben einem hydroxylhaltigen Harz zumindest ein trocknendes Oel, ein petroleumartiges Lösungsmittel mit einem Siedebereich zwischen 240 und 330°C und zumindest eine Verbindung mit einer gewissen Anzahl an Carboxylgruppen enthält. Vorzugsweise weist dieser Lack eine Säurezahl zwischen 5 und 100 auf.

GB 474 746 beschreibt eine Zusammensetzung zur Herstellung einer harten oder plastischen Masse, insbesondere für die Verwendung als Bodenbeschichtung. Die Zusammensetzung basiert auf einer wässrigen Emulsion eines flüssigen, natürlichen oder künstlichen wasserbeständigen Produkts und enthält Füllstoffe und Emulgierhilfsmittel.

Der erfindungsgemässe Haftlack zur Aufnahme von Farbpulvern ist dadurch gekennzeichnet, dass der Haftlack Kolophonium und vorbehandeltes Leinöl in einem Lösungsmittelsystem aufweist, welches primär Kohlenwasserstoffe und technische Aethanol enthält.
vorzugsweise ist der Kohlenwasserstoff Benzin mit einem Siedebereich zwischen 80°C und 160°C.

Das genannte Kolophonium ist vorteilhafterweise ein technisch reines und liegt im Gemisch zu 14 bis 36 - insbesondere zu 24 bis 30 - Massen-% vor; das vorbehandelte Leinöl ist ein unter Luftzutritt thermisch vorpolymerisiertes und liegt im Gemisch zu 8 bis 20 - insbesondere zu 10 bis 16 - Massen-% vor.

Wichtig ist, dass das Lösungsmittelsystem primär aus Benzin der Siedetemperaturgrenze - 100 bis - 140°C besteht und als Zweitkomponente technischen, gegebenenfalls denaturierten Aethanol zu 1 bis 10 Massen-% - bezogen auf das System - enthält.

Hauptaufgabe des auf einer Unterlage - gegebenenfalls in Form von Zeichen, Schriften o.ä. - aufgetragenen, oben spezifizierten Haftlackes ist die Aufnahme von auch mehr als einem Farbpulver, wobei frei oder mittels vorgeschnittener Folien das/die Farbpulver auf die Haftlack-Schicht aufgebracht, insbesondere aufgetupft, aufgepinselt oder aufgeblasen wird/werden.

Weiterer Aspekte der Anmeldung sind die Verwendung des erfindungsgemässen Haftlacks gemäss den Ansprüchen 8 und 9 sowie ein Verfahren zum Aufbringen von Farbpulvern auf ein Substrat gemäss den Ansprüchen 10-18. Ebenfalls Gegenstand der Erfindung ist ein Zwei-Komponenten-System gemäss den Ansprüche 19-23. Dieses Zwei-Komponenten-System enthält den erfindungsgemässen Haftlack und zumindest ein Farbpulver zur Auftragung auf eine klebrige Haftlackschicht auf ein Substrat. Weiter betrifft die Erfindung mit diesem Zwei-Komponenten-System beschriftete Unterlagen (Anspruch 24) sowie das Verfahren zum Aufbringen des Zwei-Komponenten-Systems (Anspruch 25).

Das Farbpulver ist dabei vorteilhafterweise staubfrei, d.h. es hat praktisch keine Anteile mit 0.... 10 µm.

Gegebenenfalls kann die eingefärbte Haftharzschicht mittels eines/r Klarsicht-Decklackes oder -Folie geschützt werden.

Die eingefärbte Haftharzschicht kann später leicht mittels eines Gemisches aus technischem Aethanol und Wasser vollständig wieder entfernt werden. Auch das Abwaschen mittels bekannter, biologisch abbaubarer Reinigungsmittel ist möglich.

Die erfindungsgemässe Anwendung des genannten Harz-Farbpulver-Systems dient zur farbigen Bezeichnung und/oder Beschriftung von Unterlagen aus Glas, poliertem Stein, glasierter Keramik, aber auch auf Einbrennlackund Kunststoff- oder Naturstoff-Flächen, insbesondere zur zeitweiligen farbigen Beschriftung von Schaufenstern.

### Beispiel 1

Ein Gemisch aus 4 Gt Benzin mit Siedegrenzen ∼100 bis ∼ 140°C, 2 Gt Kolophonium, 1 Gt thermisch vorbehandeltem Leinöl und 0,2 Gt technischem Aethanol wurde bei Raumtemperatur unter Rühren homogenisiert. Die flüssige Zubereitung konnte leicht mittels eines mit Stoff bzw. Watte umhüllten Pinsels auf gereinigtes Glas aufgebracht werden; die Haftung war ausgezeichnet. Noch bevor der Haftlack ausgetrocknet war, konnten mittels Tampons mehrere Farbpulver ("Theaterfarben") auf verschiedene Teile der Lack-Unterlage aufgebracht werden, ohne dass diese dabei "verschmierte". Der genannten Farben bestehen aus oder enthalten anorganische Pigmente wie Rutil, Eisenoxidschwarz, Eisenoxidrot oder Umbra; hellere Farben enthalten organische Pigmente wie Azetanilgelb, Monoazogelb oder Phthalocyaningrün mit Trägern wie Zinksulfid, Bariumsulfat oder Calcit.

Die nach einiger Zeit vollständig abgetrocknete Farb-Lackierung wurde anschliessend mit einer Mischung aus Wasser und technischem Aethanol restfrei abgewaschen.

### Beispiel 2

Eine der im Beispiel 1 angegebenen analoge Zusammensetzung, jedoch mit ca. 10 % weniger Benzin, wurde aussen an einem Schaufenster bei ca. 20°C Umgebungstemperatur in einem durch eine Folie vorgegebenen Umfang aufgebracht; nach dem Entfernen der Folie konnte praktisch kein Ablaufen des Haftlackes festgestellt werden.

Auf diese Unterlage wurden dann Pigmentpulver in horizontaler Schichtanordnung aufgeblasen. Erhalten wurde ein schräg nach oben verlaufender grösserer Schriftzug in verschiedenen waagrechten Farbstreifen; ein sehr eindrückliches Werbezeichen.

Auch nach zwei Wochen war das Schriftzeichen hinsichtlich Umfang und Farben immer noch unverändert.

Durch die Variation insbesondere des Leinölgehaltes konnte der Einfluss der Umgebungstemperatur auf das praktische Abbinde-Verhalten des Haftlackes genügend kompensiert werden.

Im folgenden werden noch einige chemisch-technische Angaben zu den Hauptbestandteilen des erfindungsgemässen Haftlackes gegeben:

Thermisch vorbehandeltes, technisches Leinöl:

| | |
|---|---|
| Form | flüssig |
| Farbe | gelb/braun |
| pH-Wert | neutral |
| Viskosität | 100 - 5000 mPa.s (DIN 53015, 20°C) |
| Schmelztemperatur | ∼ 0°C |
| Siedetemperatur | ∼250°C (1 kPa) |
| Dichte | bei 20°C ca. 0.930 g/cm³ |
| Löslichkeit in Wasser | praktisch unlöslich |
| Löslich in andern Lösungsmitteln | Alkohole, Hexan; |

Technisches Kolophonium (Harze von verschiedenen Arten der Gattung Pinus L.):

| | |
|---|---|
| Löslichkeit in Wasser | unlöslich |
| Löslich in andern Lösungsmitteln | Aethanol, Aether |

Aethanol, technisch, denaturiert (Gehalte: Aethanol ∼ 92 Gew.-%, Wasser ∼ 6 Gew.-%, Methylketon ∼2 Gew.-%):

| | |
|---|---|
| pH-Wert | bei g/l H₂O |
| Viskosität | dynamisch (20°C) 1,2 mPa·s |
| Siedetemperatur | 78°C |
| Dampfdruck | (20°C) -59 mbar |
| Dichte | (20°) 0,81 g/cm³ |
| Löslichkeit in Wasser | löslich |

Benzin/Siedegrenzen ∼ 100/ ∼ 140 (primär C₇-Alkane):

| | |
|---|---|
| Schmelzpunkt | < 20°C |
| Siedebereich | ∼ 98 bis ∼140°C |
| Dichte bei 20°C | 0,71 bis 0,74 g/cm³ |
| Löslichkeit in Wasser bei 20°C | < 1 g/l |

## Patentansprüche

1. Haftlack zur Aufnahme von Farbpulvern, **dadurch gekennzeichnet, dass** der Haftlack Kolophonium und vorbehandeltes Leinöl in einem Lösungsmittelsystem aufweist, welches Lösungsmittelsystem primär Kohlenwasserstoffe und technischen Aethanol enthält.

2. Haftlack gemäss Anspruch 1, **dadurch gekennzeichnet, dass** der Kohlenwasserstoff Benzin mit einem Siedebereich zwischen 80 und 160°C ist.

3. Haftlack gemäss Anspruch 1 oder 2, **dadurch gekennzeichnet, dass** das Kolophonium technisch rein ist und in einer Menge zwischen 14 und 36 Massen-% im Gemisch vorliegt.

4. Haftlack gemäss Anspruch 3, **dadurch gekennzeichnet, dass** das Kolophonium in einer Menge zwischen 24 und 30 Massen-% im Gemisch vorliegt.

5. Haftlack gemäss einem der Ansprüche 1 bis 4, **dadurch gekennzeichnet, dass** das vorbehandelte Leinöl unter Luftzutritt thermisch vorpolymerisiert ist, und dass das vorbehandelte Leinöl in einer Menge zwischen 8 und 20 Massen-% im Gemisch vorliegt.

6. Haftlack gemäss Anspruch 5, **dadurch gekennzeichnet, dass** das vorbehandelte Leinöl in einer Menge zwischen 10 und 16 Massen-% im Gemisch vorliegt.

7. Haftlack gemäss einem der Ansprüche 1 bis 6, **dadurch gekennzeichnet, dass** das Lösungsmittelsystem primär aus Benzin mit einem Siedebereich zwischen 100 und 140°C besteht und als Zweitkomponente technisches Aethanol in einer Menge zwischen 1 und 10 Massen-% bezogen auf das Lösungsmittelsystem enthält.

8. Verwendung eines Haftlacks gemäss einem der Ansprüche 1 bis 7 zur Anwendung als Haftlack-Schicht auf einem Substrat,
wobei die Schicht zur Aufnahme von zumindest einem Farbpulver geeignet ist.

9. Verwendung eines Haftlackes gemäss Anspruch 8 zur zeitweiligen farbigen Beschriftung von Geschäfts-Fenstern oder Schaufenstern.

10. Verfahren zum Aufbringen einer Farb-Lackierung, **dadurch gekennzeichnet, dass** eine in einem ersten Schritt auf eine Unterlage aufgebrachte Haftlack-Schicht nachträglich mittels eines oder mehreren Farbpulvern eingefärbt wird.

11. Verfahren zum Aufbringen einer Farblackierung gemäss Anspruch 10, enthaltend die Schritte
a) Bereitstellen eines Haftlacks gemäss einem der Ansprüche 1 bis 7;
b) Auftragen des Haftlacks in Form einer Schicht auf ein Substrat;
c) Aufbringen zumindest eines Farbpulvers auf die Haftlackschicht.

12. Verfahren gemäss Anspruch 10 oder 11, **dadurch gekennzeichnet, dass** der Haftlack in Form von Zeichen oder Schriften aufgebracht wird.

13. Verfahren gemäss einem der Ansprüche 10 bis 12, **dadurch gekennzeichnet, dass** der Haftlack frei oder mittels auf die Unterlage aufgeklebter Vorlage auf das Substrat aufgebracht wird.

14. Verfahren gemäss einem der Ansprüche 10 bis 13, **dadurch gekennzeichnet, dass** das Farbpulver durch Auftupfen, Aufpinseln oder Aufblasen auf den Haftlack aufgebracht wird.

15. Verfahren gemäss einem der Ansprüche 10 bis 14, **dadurch gekennzeichnet, dass** ein transparenter Decklack oder eine transparente Deckfolie über der eingefärbten Haftharzschicht aufgebracht wird.

16. Verfahren gemäss einem der Ansprüche 10 bis 15, **dadurch gekennzeichnet, dass** die eingefärbte Haftharzschicht mittels üblicher Reinigungsmittel vollständig entfernbar ist.

17. Verfahren gemäss Anspruch 16, **dadurch gekennzeichnet, dass** das übliche Reinigungsmittel ein Gemisch aus technischem Aethanol und Wasser ist.

18. Verfahren gemäss einem der Ansprüche 10 bis 17, **dadurch gekennzeichnet, dass** das Substrat Glas, polierter Stein, glasierte Keramik, eine Einbrennlackfläche, eine Kunststofffläche oder eine Naturstofffläche ist.

19. Zwei-Komponenten-System enthaltend
a) einen Haftlack enthaltend Kolophonium, vorbehandeltes Leinöl und ein Lösungsmittelsystem; und
b) zumindest ein Farbpulver zur Auftragung auf eine klebrige Haftlackschicht auf ein Substrat,
wobei das Lösungsmittelsystem einen Kohlenwasserstoff und technisches Ethanol enthält.

20. Zwei-Komponenten-System gemäss Anspruch 19, **dadurch gekennzeichnet, dass** das Farbpulver ein organisches Farbpulver enthält.

21. Zwei-Komponenten-System gemäss Anspruch 19 oder 20, **dadurch gekennzeichnet, dass** das Farbpulver ein anorganisches Farbpulver enthält.

22. Zwei-Komponenten-System gemäss einem der Ansprüche 19 bis 21, **dadurch gekennzeichnet, dass** das Farbpulver Rutil, Eisenoxidschwarz, Eisenoxidrot, Umbra, Azetanilgelb, Monoazogelb oder Phthalocyamingrün enthält.

23. Zwei-Komponenten-System gemäss einem der Ansprüche 19 bis 22, **dadurch gekennzeichnet, dass** das Farbpulver weiter Zinksulfid, Bariumsulfat oder Calcit enthält.

24. Unterlagen enthaltend eine farbige Beschriftung hergestellt mit einem Zwei-Komponenten-System gemäss einem der Ansprüche 19 bis 23.

25. Verfahren zum Aufbringen eines Zwei-Komponenten-Systems auf ein Substrat enthaltend die Schritte:
a) Bereitstellen eines Zwei-Komponenten-Systems gemäss einem der Ansprüche 19 bis 23;
b) Aufbringen einer Schicht des Haftlacks auf ein Substrat; und
c) Aufbringen zumindest eines Farbpulvers auf die Haftlackschicht.

## Claims

1. Adhesive varnish to receive powdered pigments, **characterised in that** the varnish comprises colophony and pretreated linseed oil in a solvent system, wherein the solvent system primarily contains hydrocarbons and technical ethanol.

2. Adhesive varnish according to claim 1, **characterised in that** the hydrocarbon is naphtha with a boiling range of 80°C to 160°C.

3. Adhesive varnish according to one of claims 1 or 2, **characterised in that** the colophony is technically pure and is present at a rate of 14wt-% through 36wt-% in the mixture.

4. Adhesive varnish according to claim 3, **characterised in that** the colophony is present at a rate of 24wt-% through 30wt-% in the mixture.

5. Adhesive varnish according to one of claims 1-4, **characterised in that** the pretreated linseed oil is formally pre-polymerised under air intake and is present in the mixture at a rate of 8wt-% through 20wt-%.

6. Adhesive varnish according to claim 5, **characterised in that** the pretreated linseed oil is present in the mixture at a rate of 10wt-% through 16wt-%.

7. Adhesive varnish according to one of claims 1-6, **characterised in that** the solvent system primarily consist of naphtha with a boiling range of 100°C-140°C, and includes as a second component technical ethanol at a rate of 1wt-% through 10wt-%, based on the solvent system.

8. Use of an adhesive varnish according to one of claims 1-7 for use as an adhesive varnish-layer on a substrate, wherein the adhesive varnish-layer is suited to receive at least one powdered pigment.

9. Use of an adhesive varnish according to claim 8 for temporary coloured writing on display windows.

10. A method for applying a coloured painting, **characterised in that** an adhesive varnish-layer, which is applied in a first step to a substrate, is subsequently coloured by one or more powdered pigments.

11. Method of applying a coloured painting according to claim 10, comprising the steps of
a) providing an adhesive varnish according to one of claims 1-7,
b) applying the adhesive varnish as a layer onto a substrate,
c) applying at least one powdered pigment to the varnish on the substrate.

12. Process according to one of claims 10 or 11, **characterised in that** the adhesive varnish is applied in the form of letters or symbols onto the substrate.

13. Process according to one of claims 10 to 12, **characterised in that** the adhesive varnish is applied onto the substrate freely or by means of a fixed master.

14. Process according to one of claims 10 to 13, **characterised in that** the powdered pigment is applied onto the adhesive varnish by dabbing on, brushing on or blowing on.

15. Process according to one of claims 10 to 14, **characterised in that** a transparent lacquer coat or film is applied onto the coloured adhesive varnish-layer.

16. Process according to one of claims 10 to 15, **characterised in that** the varnish with the powdered pigment can be removed by means of a conventional cleaner.

17. Process according to claim 16, **characterised in that** the conventional cleaner is a mixture of technical ethanol and water.

18. Process according to one of claims 10 to 17, **characterised in that** the substrate is glass, polished stone, glazed ceramic, a baked lacquer surface, a synthetic or natural material surface.

19. Two-component-system, comprising
a) an adhesive varnish comprising colophonium, pretreated linseed oil and a solvent system; and
b) at least one coloured pigment for applying onto an adhesive varnish on a substrate,
wherein the solvent system comprises a hydrocarbon and technical ethanol.

20. Two-component-system according to claim 19, **characterised in that** the coloured pigment comprises an organic pigment.

21. Two-component-system according to one of claims 19 or 20, **characterised in that** the coloured pigment comprises an inorganic pigment.

22. Two-component-system according to one of claims 19 to 21, **characterised in that** the coloured pigment comprises rutile, iron oxide black, iron oxide red, umber, benzidine yellow, monoazo yellow or phthalocyanine green.

23. Two-component-system according to one of claims 19 to 22, **characterised in that** the powdered pigment further comprises zinc sulfide, barium sulphate, or calcite.

24. Substrate comprising a coloured writing, obtained with a two-component-system according to one of claims 19-23.

25. Process for applying a two-component-system onto a substrate, comprising of:
a) providing a two-component-system according to one of claims 19-23;
b) applying a layer of an adhesive varnish onto a substrate;
c) applying at least one powdered pigment onto the adhesive varnish-layer.

## Revendications

1. Vernis adhérent, destiné à recevoir des poudres de couleur, **caractérisé en ce que** le vernis adhérent comprend de la colophane et de l'huile de lin prétraitée dans un système solvant, lequel système solvant contient de façon primaire des hydrocarbures et de l'éthanol technique.

2. Vernis adhérent selon la revendication 1, **caractérisé en ce que** l'hydrocarbure est de l'essence, avec une plage d'ébullition située entre 80 et 160 °C.

3. Vernis adhérent selon la revendication 1 ou 2, **caractérisé en ce que** la colophane est techniquement pure et présent dans le mélange dans une quantité comprise entre 14 et 36 % en masse.

4. Vernis adhérent selon la revendication 3, **caractérisé en ce que** la colophane est présente dans le mélange dans une quantité comprise entre 24 et 30 % en masse.

5. Vernis adhérent selon l'une quelconque des revendications 1 à 4, **caractérisé en ce que** l'huile de lin prétraitée est soumise à une prépolymérisation thermique sous apport d'air et **en ce que** l'huile de lin prétraitée est présente dans le mélange dans une quantité comprise entre 8 et 20 % en masse.

6. Vernis adhérent selon la revendication 5, **caractérisé en ce que** l'huile de lin prétraitée est présente dans le mélange dans une quantité comprise entre 10 et 16 % en masse.

7. Vernis adhérent selon l'une quelconque des revendications 1 à 6, **caractérisé en ce que** le système solvant est constitué de façon primaire de l'essence avec une plage d'ébullition comprise entre 100 et 140 ° C et **en ce qu'**il contient en tant que composante secondaire de l'éthanol technique dans une quantité située entre 1 et 10 % en masse, par rapport au système solvant.

8. Utilisation d'un vernis adhérent selon l'une quelconque des revendications 1 à 7, en tant que couche de vernis adhérent sur un substrat, la couche étant adaptée pour recevoir au moins une poudre de couleur.

9. Utilisation d'un vernis adhérent selon la revendication 8, pour réaliser des inscriptions en couleur temporaires sur des vitrines ou des fenêtres de magasins.

10. Procédé d'application d'une peinture en couleur, **caractérisé en ce qu'**une couche de vernis adhérent appliquée dans une première étape sur un support est ensuite colorée à l'aide d'une ou de plusieurs poudres de couleur.

11. Procédé d'application d'une peinture en couleur selon la revendication 10, comportant les étapes suivantes :
a) préparation d'un vernis adhérent selon l'une quelconque des revendications 1 à 7 ;
b) application du vernis adhérent sous la forme d'une couche sur un substrat ;
c) application d'au moins une poudre de couleur sur la couche de vernis adhérent.

12. Procédé selon la revendication 10 ou 11, **caractérisé en ce que** le vernis adhérent est appliqué sous la forme de signes ou de caractères d'écriture.

13. Procédé selon l'une quelconque des revendications 10 à 12, **caractérisé en ce que** le vernis adhérent est appliqué librement sur le substrat ou à l'aide d'un modèle collé sur le support.

14. Procédé selon l'une quelconque des revendications 10 à 13, **caractérisé en ce que** la poudre de couleur est appliquée sur le vernis adhérent au tampon, au pinceau ou par soufflage.

15. Procédé selon l'une quelconque des revendications 10 à 14, **caractérisé en ce qu'**un vernis de finition transparent ou un film de finition transparent est appliqué sur la couche de résine adhérente teintée.

16. Procédé selon l'une quelconque des revendications 10 à 15, **caractérisé en ce que** la couche de résine adhérente teintée peut être entièrement éliminée à l'aide de détergents usuels.

17. Procédé selon la revendication 16, **caractérisé en ce que** le détergent usuel est un mélange d'éthanol technique et d'eau.

18. Procédé selon l'une quelconque des revendications 10 à 17, **caractérisé en ce que** le substrat est du verre, une pierre polie, une vitrocéramique, une surface de vernis-émail, une surface en matière plastique ou une surface en substance naturelle.

19. Système à deux composants contenant
a) un vernis adhérent contenant du colophane, de l'huile de lin prétraitée et un système solvant ; et
b) au moins une poudre de couleur, destinée à être appliquée sur une couche de vernis adhérent collante sur un substrat,
le système solvant contenant un hydrocarbure et de l'éthanol technique.

20. Système à deux composants selon la revendication 19, **caractérisé en ce que** la poudre de couleur est une poudre de couleur organique.

21. Système à deux composants selon la revendication 19 ou 20, **caractérisé en ce que** la poudre de couleur est une poudre de couleur inorganique.

22. Système à deux composants selon l'une quelconque des revendications 19 à 21, **caractérisé en ce que** la poudre de couleur contient du rutile, l'oxyde de fer noir, de l'oxyde de fer rouge, de la terre d'ombre, du jaune d'acétanile, du jaune mono azoique ou du vert de phtalocyanine.

23. Système à deux composants selon l'une quelconque des revendications 19 à 22, **caractérisé en ce que** la poudre de couleur contient en outre du sulfure de zinc, du sulfate de baryum ou de la calcite.

24. Supports comprenant une inscription en couleur, fabriquée à l'aide d'un système à deux composants selon l'une quelconque des revendications 19 à 23.

25. Procédé d'application d'un système à deux composants sur un substrat, comprenant les étapes suivantes :
a) préparation d'un système à deux composants selon l'une quelconque des revendications 19 à 23 ;
b) application d'une couche du vernis adhérent sur un substrat ; et
c) application d'au moins une poudre de couleur sur la couche de vernis adhérent.
